# FASCICULE DE BREVET EUROPEEN

(11) **EP 1 488 954 B1**
(45) Date de publication et mention de la délivrance du brevet: **02.04.2008**
(21) Numéro de dépôt: 04291506.6
(22) Date de dépôt: 15.06.2004
(51) Int. Cl.: B60Q 1/00, B60Q 1/26, F21V 7/00

(54) **Système d'éclairage ou de signalisation pour véhicule automobile**
Beleuchtungs- oder Signalisierungssystem für Fahrzeuge
Lighting or signaling system for automotive vehicle

(30) Priorité: 16.06.2003 FR 0307243
(43) Date de publication de la demande: 22.12.2004
(73) Titulaire: VALEO VISION, 93012 Bobigny Cédex (FR)
(72) Inventeur: De Lamberterie, Antoine, 75019 Paris (FR)
(74) Mandataire: Renous Chan, Véronique

(56) Documents cités:
- EP-A- 0 974 485
- EP-A- 1 184 619
- US-A- 1 845 628
- US-A- 5 136 483

## Description

L'invention est relative à un système d'éclairage ou de signalisation pour véhicule automobile comportant plusieurs sources lumineuses de dimensions réduites.

L'invention concerne plus particulièrement, mais non exclusivement, un système dans lequel les sources lumineuses sont constituées par des diodes électroluminescentes (led). D'une manière générale l'expression « source lumineuse de dimensions réduites » utilisée dans la description et les revendications, désigne une source dont les dimensions sont du même ordre que celles d'une diode électroluminescente.

Les systèmes d'éclairage ou de signalisation pour véhicules automobiles font de plus en plus appel à des sources lumineuses de dimensions réduites ayant une puissance élevée permettant de n'utiliser qu'un nombre limité de sources, en particulier de l'ordre d'une dizaine ou moins. Par source lumineuse ayant une puissance élevée on désigne une source produisant un flux lumineux d'au moins 30 lumens.

L'invention a pour but, surtout, de réaliser un système d'éclairage ou de signalisation, comportant plusieurs sources lumineuses de dimensions réduites, qui permet d'obtenir une plage éclairante homogène. L'invention vise notamment à assurer une fonction d'éclairage ou de signalisation qui ne nécessite pas de coupure dans le faisceau. Comme exemple de telle fonction on peut citer : projecteur route, DRL (feu diurne), indicateur de direction, feu de stop, FSSV (feu de stop surélevé sous forme de barre linéaire), antibrouillard, feu de recul.

Il est souhaitable en outre que le système d'éclairage ou de signalisation puisse se combiner aisément avec d'autres fonctions, par exemple : code, éclairage d'appoint, ou autre fonction de signalisation.

Il est par ailleurs connu du document US-1,845,628 un dispositif d'éclairage automobile utilisant des lampes disposées latéralement de façon à être invisibles dans le projecteur une fois monté, émettant de la lumière en direction de réflecteurs disposés en regard.

Il est également connu du document EP 974 485 un dispositif de signalisation pour automobile, où une pluralité de diodes électroluminescentes sont disposées en regard du pourtour d'une lentille qui va collecter et redresser les rayons émis par celles-ci.

Selon l'invention, un système d'éclairage ou de signalisation pour véhicule automobile comportant plusieurs sources lumineuses de dimensions réduites est caractérisé en ce que les sources lumineuses sont disposées autour d'une paroi réfléchissante admettant un axe optique, et sont orientées de manière à éclairer cette paroi réfléchissante suivant une direction radiale par rapport à l'axe optique, la paroi réfléchissante étant prévue pour renvoyer la lumière provenant des sources suivant une direction sensiblement parallèle à l'axe optique.

Les sources lumineuses peuvent être disposées, de préférence à intervalles réguliers, suivant un anneau entourant la paroi réfléchissante. Avantageusement, les sources lumineuses sont constituées par des diodes électroluminescentes. La paroi réfléchissante peut être convexe vers l'extérieur, notamment de révolution autour de l'axe optique, en particulier tronconique ou à génératrice incurvée. La paroi réfléchissante (1,101) définit une surface délimitant une ouverture, notamment centrée par rapport à ladite surface, ladite paroi étant notamment de forme annulaire : cette forme correspondant alors à la disposition également annulaire des diodes mentionnée plus haut.

L'invention concerne également un projecteur comprenant le dispositif d'éclairage ou de signalisation avec la paroi réfléchissante munie d'une telle ouverture et, comportant également au moins une source lumineuse associée à un réflecteur, et aptes à émettre un faisceau lumineux traversant au moins en partie cette ouverture dans la paroi réfléchissante (1,101). On peut ainsi avoir un projecteur assurant une première fonction avec la paroi réfléchissante « ouverte », de type annulaire, avec ses source lumineuses de type Leds, et assurant une seconde fonction avec une source et un réflecteur , disposés par exemple à l'arrière de cet anneau, et configurés de façon à émettre de la lumière par l'ouverture de la paroi réfléchissante annulaire. On a ainsi un projecteur à deux fonctions compact et d'un aspect visuel original.

La paroi réfléchissante est constituée par une surface travaillant en réflexion totale.

Le système d'éclairage ou de signalisation peut comporter une pièce unique, en verre ou polymère cristal, en forme de couronne. La pièce comporte avantageusement des logements répartis sur sa périphérie pour les sources lumineuses, cette pièce étant prévue pour assurer une première fonction consistant à collimater les rayons issus des sources et à les orienter vers la paroi réfléchissante, et une deuxième fonction consistant à redresser les rayons lumineux dans l'axe optique grâce à la paroi réfléchissante. La pièce peut comporter, au niveau de chaque logement, une protubérance dont la surface extérieure assure la réflexion de rayons issus de la source associée au logement.

Des moyens pour étaler la lumière, en particulier des tores, peuvent être prévus sur la paroi réfléchissante pour étaler le faisceau lumineux en fonction de la photométrie désirée.

Selon une variante de réalisation, le système d'éclairage ou de signalisation comporte, pour chaque source lumineuse, un collimateur, et pour l'ensemble des sources une paroi réfléchissante et un écran orthogonal à l'axe optique de la paroi réfléchissante. L'écran est transparent et peut comporter des formes géométriques (tores ou stries) pour répartir convenablement la lumière afin d'assurer la photométrie de la fonction recherchée.

Chaque collimateur peut comprendre un logement pour une source lumineuse et une première zone centrale fonctionnant par transmission, aussi bien dans un plan méridien à l'anneau que dans le plan de l'anneau, et une seconde zone entourant la première et fonctionnant par réflexion totale, cette seconde zone comportant dans le plan méridien une génératrice prévue pour donner un faisceau parallèle à l'axe de la diode, et dans le plan de l'anneau une génératrice prévue pour envoyer les rayons globalement vers le centre de l'anneau.

Le système d'éclairage ou de signalisation peut être prévu dans un projecteur comportant un réflecteur et une source lumineuse centrale assurant avec le réflecteur une fonction déterminée, l'axe optique du réflecteur étant confondu avec celui de la paroi réfléchissante et les sources lumineuses de dimensions réduites entourant le contour du réflecteur.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une vue schématique de face d'un projecteur lumineux de véhicule automobile équipé d'un système de signalisation selon l'invention.
Fig.2 est une coupe axiale schématique du projecteur de Fig.1.
Fig.3 est une coupe partielle suivant la ligne III-III de Fig.4 d'une réalisation en une pièce du système de signalisation.
Fig.4 est une coupe à plus grande échelle suivant la ligne IV-IV de Fig.3.
Fig.5 et 6 sont des coupes, semblables à Fig.4, illustrant des variantes de réalisation.
Fig.7 illustre schématiquement une variante de réalisation, en coupe partielle suivant un plan méridien passant par l'axe optique.
Fig.8 est une coupe partielle suivant la ligne VIII -VIII de Fig.7.
Fig.9, enfin, illustre schématiquement une autre variante de réalisation, en coupe par un plan méridien.

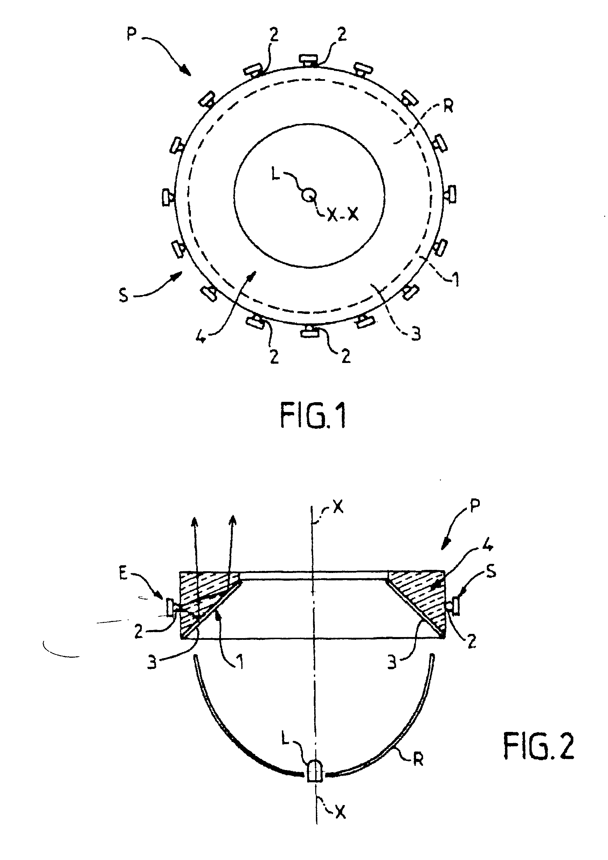

En se reportant à Figs.1 et 2 des dessins, on peut voir un projecteur P de véhicule automobile dans une représentation simplifiée ne faisant pas apparaître le boîtier à l'intérieur duquel sont disposés les éléments des Figs.1 et 2. Ce boîtier est généralement fermé à l'avant, selon le sens de propagation de la lumière, par une glace non représentée.

Le projecteur P comporte une source lumineuse centrale L, par exemple constituée par une lampe à incandescence ou une lampe à décharge gazeuse, associée à un réflecteur R. La source L est généralement disposée suivant l'axe optique du réflecteur R et permet d'assurer une fonction d'éclairage déterminée, par exemple la fonction code. Ce système optique peut donc être de type dit à surface complexe, mais

Le projecteur P comporte en outre un système d'éclairage ou de signalisation S. Le système S comprend une paroi réfléchissante 1 d'axe optique X-X confondu avec celui du réflecteur R, et plusieurs sources lumineuses de dimensions réduites, avantageusement constituées par des diodes électroluminescentes 2. L'axe optique X-X est parallèle à l'axe de la route.

Les diodes 2 sont disposées à intervalles réguliers selon un anneau dont le plan moyen est orthogonal à l'axe optique X-X. Cet anneau entoure la paroi réfléchissante 1 et le contour du réflecteur R. Selon l'exemple de Fig.1, seize diodes 2 sont réparties sur la circonférence. En variante, les diodes 2 pourraient n'être prévues que sur des arcs de la circonférence.

Les diodes 2 sont orientées de manière à éclairer la paroi réfléchissante 1 suivant une direction essentiellement radiale par rapport à l'axe optique X-X. La paroi réfléchissante 1 est prévue pour renvoyer la lumière provenant des diodes 2 sensiblement suivant la direction de l'axe optique X-X.

La paroi réfléchissante 1 peut être formée par la face arrière 3 d'une pièce unique 4 (Fig.2) en couronne ayant une section, dans un plan méridien, en forme de trapèze (ou triangle) rectangle dont un côté est orthogonal à l'axe X-X et dont la grande base parallèle à l'axe X-X est voisine des diodes 2. La face arrière 3 de la section transversale est tronconique, avec génératrices rectilignes inclinées à 45° sur l'axe X-X. En variante, les génératrices pourraient être constituées par des arcs de courbe (surface parabolique, elliptique ou hyperbolique). La face arrière 3 est munie d'une couche réfléchissante, par exemple une couche aluminée. En variante, la face arrière 3 travaille en réflexion totale, sans dépôt de couche. Selon Figs.1 et 2, la paroi réfléchissante 1 est de révolution autour de l'axe X-X, convexe du côté des diodes 2. La pièce 4 et la paroi 1 comportent une ouverture centrale circulaire pour le passage du faisceau lumineux provenant de la lampe L.

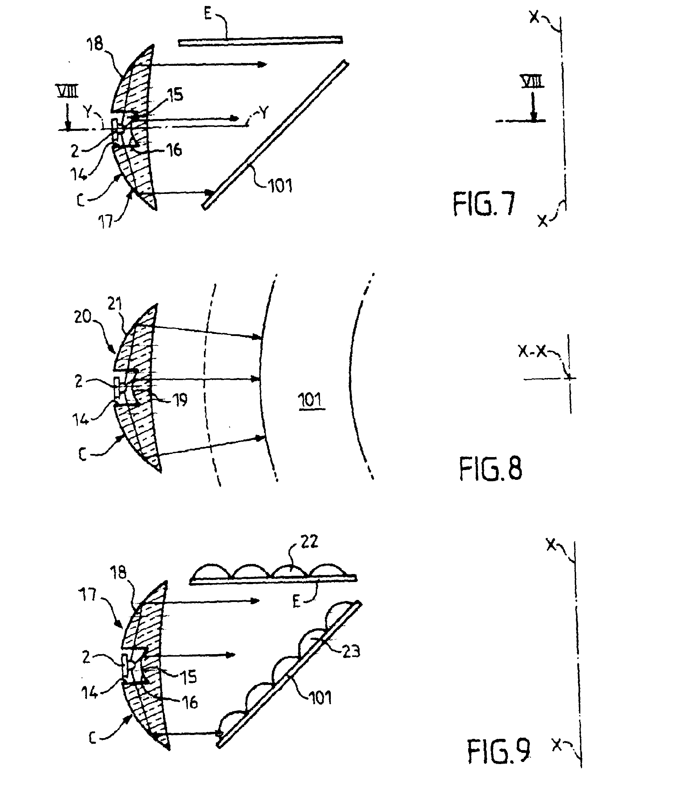

Selon les variantes des Figs.7 à 9, la paroi réfléchissante est constituée par une simple paroi tronconique dont la section par un plan méridien est formée par un segment.

La pièce unique 4 est en matière transparente, notamment en verre ou en polymère cristal (par exemple en polycarbonate, ou en PMMA/polyméthacrylate de méthyle, ou en PMMI, etc.). Cette pièce 4 assure une double fonction :
- d'une part une fonction de collimateur pour orienter de façon générale les rayons issus des sources 2 vers la paroi réfléchissante 1 ;
- d'autre part redresser les rayons lumineux sensiblement suivant la direction de l'axe optique X-X grâce à la paroi réfléchissante 1.

Le système de Figs.1 et 2 donne une plage éclairante homogène de forme globalement annulaire qui entoure l'autre fonction assurée par la source L et le réflecteur R. Selon les cas, il est possible de permettre la mise en marche séparée et/ou simultanée des deux fonctions, ou de ne permettre que la mise en marche séparée de chacune des deux fonctions.

Bien entendu, le système S de Figs.1 et 2 peut être utilisé aussi seul, sans la lampe L et le réflecteur R.

La plage éclairante fournie par les diodes 2 et la paroi réfléchissante 1 assure, de préférence, une fonction qui ne nécessite pas de coupure dans le faisceau lumineux, par exemple une fonction route, ou DRL (feu diurne) ou indicateur de direction, ou feu de stop, ou FSSV, antibrouillard, ou feu de recul.

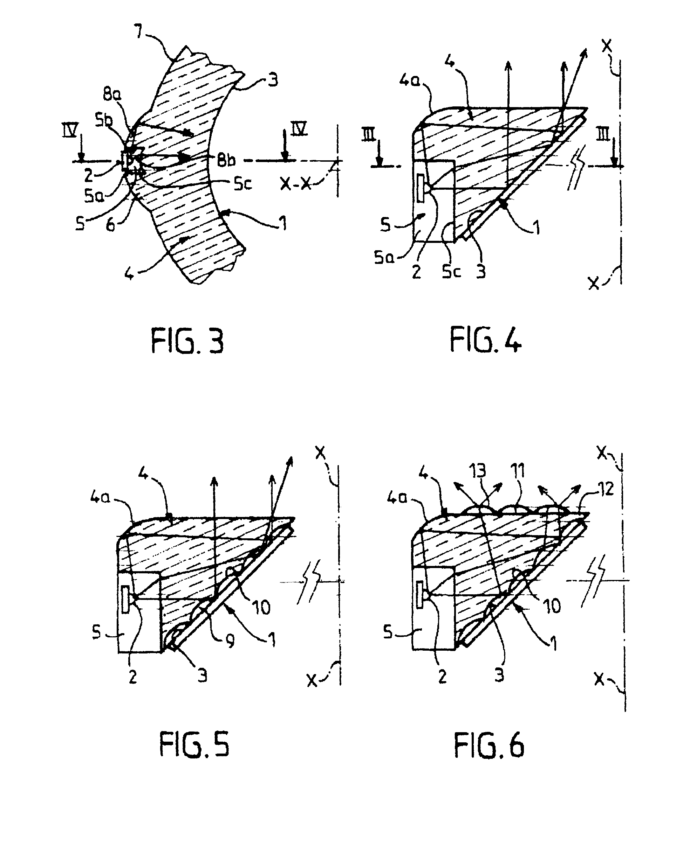

Figs.3 et 4 montrent une variante de réalisation selon laquelle la pièce 4 de révolution en couronne comporte, sur son pourtour extérieur, des zones évidées formant des logements 5, régulièrement répartis suivant la circonférence, pour recevoir les diodes 2. La section d'un logement 5 par un plan orthogonal à l'axe X-X (Fig.3) est limitée par deux faces planes parallèles 5a, 5b sensiblement radiales et une surface de fond 5c convexe vers l'extérieur. Le logement 5 est ouvert à l'opposé du fond 5c et à son extrémité opposée à la face de sortie de la pièce 4. De part et d'autre du logement 5, la pièce 4 peut présenter des protubérances cylindriques 6 convexes vers l'extérieur. Les génératrices des protubérances 6 sont parallèles à l'axe X-X. Le bord périphérique extérieur 4a (Fig.4) de la pièce 4 admet une section en arc de courbe convexe vers l'extérieur.

Comme schématisé sur Fig.3, des rayons lumineux tels que 8a issus de la diode 2 et formant un angle relativement grand, notamment supérieur à 60°, avec la direction radiale, traversent les faces latérales 5a ou 5b et subissent une réflexion totale ou partielle contre la surface extérieure des protubérances 6. Ces rayons sont réfléchis sensiblement en direction de l'axe optique X-X après une nouvelle réflexion par la surface 3. Des rayons tels que 8b, moins inclinés sur la direction radiale, atteignent directement la surface de fond 5c convexe et sont dirigés vers l'axe optique X-X. Tous les rayons lumineux sont réfléchis par la surface 3 aluminée ou agissant en réflexion totale.

La pièce 4 des Figs.3 et 4 peut être réalisée par moulage. Le démoulage de la pièce s'effectue suivant une direction parallèle à l'axe X-X.

Fig.5 montre une variante de réalisation selon laquelle des tores 9 ont été déposés sur la face réfléchissante 3. Chaque tore 9 présente une méridienne limitée par un arc de courbe 10 tournant sa concavité vers la face 3. Plusieurs arcs de courbe 10 contigus se succèdent le long de la face 3. Sur Fig.5, cinq arcs de courbe 10 sont présents. Chaque tore 9 est de révolution autour de l'axe de la pièce 4. La réalisation des tores 9 peut être assurée en prévoyant des évidements correspondants dans la face tronconique de la pièce 4. On peut aussi procéder à un aluminage.

Les tores 9 permettent d'étaler le faisceau lumineux en fonction de la photométrie désirée.

Fig.6 montre une autre variante de réalisation selon laquelle des tores 11 sont déposés sur la face de sortie 12 de la pièce 4. Cette face 12 est orthogonale à l'axe X-X. Chaque tore 11 présente une méridienne limitée par un arc de courbe 13 convexe vers l'extérieur. Les tores 11 sont réalisés en une matière transparente qui peut être identique à celle de la pièce, et contribuent également à étaler le faisceau lumineux. Selon cet exemple trois tores 11 sont prévus avec des méridiennes contiguës.

La pièce 4 de Fig.6 comporte des tores sur ses deux faces : face aluminée 3 et face de sortie 12. Selon une variante, seule la face de sortie 12 serait munie de tores 11.

Figs.7 et 8 montrent un autre exemple de réalisation selon lequel, au lieu d'utiliser une seule pièce 4 souvent difficile à réaliser compte tenu de son poids et de son aspect massif, on combine trois types d'éléments à savoir des collimateurs C, une paroi réfléchissante séparée 101 et un écran E.

Un collimateur C est associé à chaque diode 2. Si on utilise N diodes, on utilisera N collimateurs C. Selon Fig1, N=16.

Chaque collimateur C a pour fonction de récupérer un maximum d'énergie lumineuse provenant de la diode électroluminescente 2 associée et de former un faisceau lumineux sensiblement parallèle dirigé radialement vers la paroi réfléchissante 101.

Un collimateur C est formé par un ménisque qui, dans le sens radial, est convexe vers l'extérieur et concave vers l'intérieur. Au sommet de sa zone convexe, le ménisque C comporte un logement 14 cylindrique s'ouvrant vers l'extérieur et dont le fond est formé par une surface convexe 15, notamment de révolution autour de l'axe Y-Y du logement 14. La diode 2 associée au collimateur C est disposée dans le logement 14.

Dans un plan méridien de la paroi réfléchissante 101 la section du collimateur comprend deux zones 16, 17 (Fig.7).

La zone 16 correspond à la surface de fond 15. Elle fonctionne par transmission et permet de collimater, c'est à dire de rendre parallèles à une direction radiale, des rayons lumineux issus de la diode 2 et formant un angle faible, notamment inférieur à 40°, avec l'axe du faisceau de la diode confondu avec l'axe Y-Y.

La zone 17 correspond à la face arrière du ménisque qui est limitée par un arc 18 de parabole ou de courbe voisine. Cette zone 17 fonctionne par réflexion totale et vient collimater les autres rayons lumineux issus de la diode 2 en les réfléchissant globalement parallèlement à l'axe Y-Y vers la paroi 101.

Dans le plan de Fig.7, le faisceau parallèle de rayons lumineux dirigés vers la paroi réfléchissante 101 est renvoyé par cette paroi sensiblement parallèlement à l'axe optique X-X. L'inclinaison des génératrices de la paroi 101 dans le plan de Fig.7 par rapport à l'axe X-X est égale à 45°.

Fig.8 est une section suivant la ligne VIII-VIII de Fig.7, c'est-à-dire suivant un plan parallèle au plan moyen de l'anneau formé la couronne de diodes 2 et de collimateurs C.

La section d'un collimateur C, selon Fig.8, comprend encore deux zones 19, 20. La zone 19 semblable à la zone 16 de Fig.7, fonctionne de la même manière pour les rayons issus de la diode 2 sous un angle faible. La zone 19 produit un faisceau de rayons sensiblement parallèles, de faible largeur dirigé vers le centre de l'anneau situé sur l'axe X-X.

La zone 20, ou face arrière du ménisque, est délimitée par une courbe 21 de forme elliptique. La zone 20 travaille en réflexion totale et la forme elliptique de la courbe 21 permet de faire converger les rayons réfléchis vers l'axe X-X, c'est-à-dire vers le centre de l'anneau. Les rayons réfléchis atteignent la paroi réfléchissante 101 de façon radiale et sont renvoyés par cette paroi 101 dans l'axe de la route.

La paroi réfléchissante 101 est constituée par un élément à surface réfléchissante tronconique semblable à la face réfléchissante de la pièce massive de Figs.3 et 4.

L'écran E, comme illustré sur Fig.9, est situé en avant de la paroi réfléchissante, suivant le sens de propagation de la lumière. Cet écran E est réalisé en une matière transparente et peut comporter des formes géométriques, tores 22 ou stries, par exemple sur sa surface extérieure, pour répartir convenablement la lumière et assurer la photométrie de la fonction recherchée. Des tores 23 peuvent être prévus également sur la paroi 101.

Il est à noter que d'une manière similaire à la réalisation de Fig.6, la paroi réfléchissante 101 et/ou l'écran E peuvent être galbés et/ou posséder des formes géométriques du type tores ou stries.

Le système d'éclairage de l'invention permet d'obtenir un anneau lumineux homogène par réflexion sur le miroir (ou paroi réfléchissante) 1, 101, complété le cas échéant par l'écran de sortie E, ce qui permet de mélanger complètement les images.

Lorsque les sources sont formées par des diodes, chaque diode 2 se trouve derrière son collimateur C et, le cas échéant, derrière la pièce 4. Un écran thermique est ainsi formé qui protège la diode 2 vis-à-vis d'une autre source de chaleur constituée par exemple par la lampe L. Il est connu que le comportement d'une diode électroluminescente en environnement thermique est le point délicat pour son intégration dans un projecteur lumineux. Une augmentation de la température environnante entraîne une baisse du flux de la diode et une limitation de sa durée de vie, voire sa destruction.

La forme de la paroi réfléchissante conique 1, 101 facilite l'utilisation de systèmes volumineux à l'intérieur de l'anneau, par exemple un projecteur elliptique avec réflecteur R.

Il est possible d'envisager des systèmes elliptiques de type multifonction (code/route) avec un montage rotatif permettant au faisceau lumineux de suivre le tracé de la route. Les dispositifs permettant une rotation du faisceau lumineux sont relativement volumineux et comportent de nombreux éléments (par exemple électro-aimants) pour lesquels les risques d'interférence avec le système proposé sont évités.

## Revendications

1. Projecteur (P) comprenant :
- un système d'éclairage ou de signalisation pour véhicule automobile comportant plusieurs sources lumineuses (2) de dimensions réduites,
- et également au moins une source lumineuse (L) associée à un réflecteur (R),
**caractérisé en ce que** les sources lumineuses (2) de dimensions réduites sont disposées autour d'une paroi réfléchissante (1,101) admettant un axe optique (X-X) et sont orientées de manière à éclairer la paroi réfléchissante (1,101) suivant une direction radiale par rapport à son axe optique (X-X), **en ce que** la paroi réfléchissante (1,101 définit une surface délimitant une ouverture et est prévue pour renvoyer la lumière provenant des sources (2) de dimensions réduites suivant une direction sensiblement parallèle à l'axe optique (X-X) en travaillant en réflexion totale, et **en ce que** la source lumineuse (L) associée à un réflecteur (R) est apte à émettre un faisceau lumineux traversant au moins en partie l'ouverture de la paroi réfléchissante (1,101).

2. Projecteur (P) selon la revendication 1, **caractérisé en ce que** les sources lumineuses (2) de dimensions réduites sont disposées suivant un anneau entourant la paroi réfléchissante (1, 101).

3. Projecteur (P) selon la revendication 1 ou 2, **caractérisé en ce que** les sources lumineuses de dimensions réduites sont constituées par des diodes électroluminescentes (2).

4. Projecteur (P)selon l'une des revendications 1 à 3, **caractérisé en ce que** la paroi réfléchissante (1,101) est convexe vers l'extérieur, et notamment de révolution autour de l'axe optique (X-X), en particulier tronconique ou à génératrice incurvée.

5. Projecteur (P) selon l'une des revendications 1 à 4, **caractérisé en ce que** la paroi réfléchissante (1,101) définit une surface délimitant une ouverture centrée par rapport à ladite surface, ladite paroi étant notamment de forme annulaire.

6. Projecteur (P) selon l'une des revendications précédentes, **caractérisé par le fait que** le système comporte une pièce unique (4), en verre ou polymère cristal, en couronne.

7. Projecteur (P) selon la revendication 6, **caractérisé en ce que** la pièce (4) comporte des logements (5) répartis sur sa périphérie pour les sources lumineuses (2) de dimensions réduites.

8. Projecteur (P) selon la revendication 6 ou 7, **caractérisé en ce que** la pièce (4) est prévue pour assurer une première fonction consistant à collimater les rayons issus des sources lumineuses (2) de dimensions réduites et à les orienter vers la paroi réfléchissante, et une deuxième fonction consistant à redresser les rayons lumineux dans l'axe optique grâce à la paroi réfléchissante.

9. Projecteur (P) selon la revendication 7 ou 8, **caractérisé en ce que** le fond (5c) de chaque logement a une forme convexe pour collimater les rayons.

10. Projecteur (P) selon l'une des revendications précédentes, **caractérisé en ce que** des moyens (9, 23) pour étaler la lumière, en particulier des tores, sont prévus sur la paroi réfléchissante (1, 101) pour étaler le faisceau lumineux en fonction de la photométrie désirée.

11. Projecteur (P) selon la revendication 6 ou 7, **caractérisé en ce que** la face de sortie (12) de la pièce unique (4) comporte des tores (11) pour étaler le faisceau lumineux.

12. Projecteur (P) selon l'une des revendications précédentes, **caractérisé en ce qu'il** comporte, pour chaque source lumineuse (2) de dimensions réduites, un collimateur (C) et, pour l'ensemble des sources, une paroi réfléchissante (101) et un écran (E) transparent.

13. Projecteur (P) selon la revendication 12. **caractérisé en ce que** l'écran (E) comporte des formes géométriques, tores (22) ou stries, pour répartir convenablement la lumière afin d'assurer la photométrie de la fonction recherchée.

14. Projecteur (P) selon la revendication 12 ou 13, **caractérisé en ce que** chaque collimateur (C) comprend un logement (14) pour la source lumineuse (2) de dimensions réduites associée, une première zone (16, 19) fonctionnant par transmission, et une seconde zone (17, 20) entourant la première fonctionnant par réflexion totale.

15. Projecteur (P) selon la revendication 14, **caractérisé en ce que**, dans le plan méridien, la seconde zone (17) de la section du collimateur (C) est limitée par un arc (18) de parabole, ou courbe voisine, réfléchissant les rayons globalement parallèlement à l'axe (Y-Y) du logement (14) et que, dans un plan parallèle au plan moyen de la couronne de diodes(2), la seconde zone (20) de la section du collimateur (C) est limitée par une courbe (21) de forme elliptique pour faire converger les rayons globalement vers le centre.

## Claims

1. Headlight (P), comprising:
- a lighting or signalling system for a motor vehicle, comprising a plurality of sources of light (2) with reduced dimensions;
- and also at least one source of light (L) associated with a reflector (R), **characterised in that** the sources of light (2) with reduced dimensions are disposed around a reflective wall (1, 101) which admits an optical axis (X-X), and are oriented such as to light the reflective wall (1, 101) according to a direction which is radial relative to its optical axis (X-X), and **in that** the reflective wall (1, 101) defines a surface which delimits an opening and is designed to return the light obtained from the sources (2) with reduced dimensions according to a direction which is substantially parallel to the optical axis (X-X), whilst operating in total reflection, and **in that** the source of light (L) which is associated with a reflector (R) can emit a light beam which passes at least partly through the opening in the reflective wall (1, 101).

2. Headlight (P) according to claim 1, **characterised in that** the sources of light (2) with reduced dimensions are disposed according to a ring which surrounds the reflective wall (1, 101).

3. Headlight (P) according to claim 1 or claim 2, **characterised in that** the sources of light with reduced dimensions consist of electro-luminescent diodes (2).

4. Headlight (P) according to one of claims 1 to 3, **characterised in that** the reflective wall (1, 101) is convex towards the exterior, and in particular generated by revolution around the optical axis (X-X), and is specifically frusto-conical or has a curved generatrix.

5. Headlight (P) according to one of claims 1 to 4, **characterised in that** the reflective wall (1, 101) defines a surface which delimits an opening which is centred relative to the said surface, the said wall having in particular an annular form.

6. Headlight (P) according to one of the preceding claims, **characterised in that** the system comprises a single part (4) made of glass or crystal polymer, in the form of a ring.

7. Headlight (P) according to claim 6, **characterised in that** the part (4) comprises receptacles (5) which are distributed around its periphery for the sources of light (2) with reduced dimensions.

8. Headlight (P) according to claim 6 or claim 7, **characterised in that** the part (4) is designed to assure a first function consisting of collimating the rays obtained from the sources of light (2) with reduced dimensions and orienting them towards the reflective wall, and a second function consisting of adjusting the light rays along the optical axis by means of the reflective wall.

9. Headlight (P) according to claim 7 or claim 8, **characterised in that** the base (5c) of each receptacle has a convex form in order to collimate the rays.

10. Headlight (P) according to any one of the preceding claims, **characterised in that** means (9, 23) for spreading the light, and in particular toruses, are provided on the reflective wall (1, 101) in order to spread the light beam according to the photometry required.

11. Headlight (P) according to claim 6 or claim 7, **characterised in that** the output surface (12) of the single part (4) comprises toruses (11) in order to spread the light beam.

12. Headlight (P) according to one of the preceding claims, **characterised in that**, for each light source (2) with reduced dimensions, it comprises a collimator (C), and, for the sources as a whole, a reflective wall (101) and a transparent screen (E).

13. Headlight (P) according to claim 12, **characterised in that** the screen (E) comprises geometric forms, toruses (22) or striations, in order to distribute the light in a manner appropriate for assuring the photometry of the function sought.

14. Headlight (P) according to claim 12 or claim 13, **characterised in that** each collimator (C) comprises a receptacle (14) for the associated source of light (2) with reduced dimensions, a first area (16, 19) functioning by means of transmission, and a second area (17, 20), which surrounds the first, functioning by means of total reflection.

15. Headlight (P) according to claim 14, **characterised in that**, on the meridian plane, the second area (17) of the cross-section of the collimator (C) is delimited by an arc (18) of a parabola or a curve close to this, which reflects the rays globally parallel to the axis (Y-Y) of the receptacle (14), and **in that**, on a plane parallel to the mean plane of the ring of diodes (2), the second area (20) of the cross-section of the collimator (C) is delimited by a curve (21) with an elliptical form, in order to make the rays converge globally towards the centre.

## Patentansprüche

1. Scheinwerfer (P) mit:
- einem Beleuchtungs- oder Signalgebungssystem für Kraftfahrzeuge, das mehrere Lichtquellen (2) mit verringerter Größe umfasst,
- und ferner wenigstens einer einem Reflektor (R) zugeordneten Lichtquelle (L),
**dadurch gekennzeichnet, dass** die Lichtquellen mit verringerter Größe um eine reflektierende Wand (1, 101) mit optischer Achse (X-X) herum angeordnet und solchermaßen ausgerichtet sind, dass die reflektierende Wand (1, 101) in einer zu ihrer optischen Achse (X-X) radialen Richtung beleuchtet wird, dass die reflektierende Wand (1, 101) eine Fläche bildet, die eine Öffnung begrenzt, und dazu vorgesehen ist, mittels Totalreflexion das von den Lichtquellen mit verringerter Größe stammende Licht in eine zur optischen Achse (X-X) im Wesentlichen parallele Richtung zu leiten, und dass die einem Reflektor (R) zugeordnete Lichtquelle (L) ein Lichtbündel auszusenden vermag, das wenigstens zum Teil die Öffnung der reflektierenden Wand (1, 101) durchquert.

2. Scheinwerfer (P) nach Anspruch 1,
**dadurch gekennzeichnet, dass** die Lichtquellen (2) mit verringerter Größe in einem die reflektierende Wand (1, 101) umgebenden Ring angeordnet sind.

3. Scheinwerfer (P) nach Anspruch 1 oder 2,
**dadurch gekennzeichnet, dass** die Lichtquellen mit verringerter Größe von Leuchtdioden (2) gebildet sind.

4. Scheinwerfer (P) nach einem der Ansprüche 1 bis 3,
**dadurch gekennzeichnet, dass** die reflektierende Wand (1, 101) nach außen konvex und insbesondere um die optische Achse (X-X) rotationssymmetrisch, insbesondere kegelstumpfartig ist oder eine gekrümmte Erzeugende aufweist.

5. Scheinwerfer (P) nach einem der Ansprüche 1 bis 4,
**dadurch gekennzeichnet, dass** die reflektierende Wand (1, 101) eine Fläche bildet, die eine bezüglich dieser Fläche zentrierte Öffnung umgrenzt, wobei die Wand insbesondere ringförmig ist.

6. Scheinwerfer (P) nach einem der vorhergehenden Ansprüche,
**dadurch gekennzeichnet, dass** das System ein einziges kranzförmiges Teil (4) aus Glas oder kristallklarem Polymer umfasst.

7. Scheinwerfer (P) nach Anspruch 6,
**dadurch gekennzeichnet, dass** das Teil (4) über seinen Umfang verteilt Aufnahmen (5) für die Lichtquellen (2) mit verringerter Größe aufweist.

8. Scheinwerfer (P) nach Anspruch 6 oder 7,
**dadurch gekennzeichnet, dass** das Teil (4) dazu vorgesehen ist, eine erste Funktion auszuführen, die darin besteht, die von den Lichtquellen (2) mit verringerter Größe abgegebenen Lichtstrahlen zu kollimieren und zur reflektierenden Wand auszurichten, und eine zweite Funktion, die darin besteht, die Lichtstrahlen mittels der reflektierenden Wand in die optische Achse zu richten.

9. Scheinwerfer (P) nach Anspruch 7 oder 8,
**dadurch gekennzeichnet, dass** der Boden (5c) jeder Aufnahme zum Kollimieren der Lichtstrahlen eine konvexe Form hat.

10. Scheinwerfer (P) nach einem der vorhergehenden Ansprüche,
**dadurch gekennzeichnet, dass** auf der reflektierenden Wand (1, 101) Mittel (9, 23) zum Auffächern des Lichts, insbesondere Toren, vorgesehen sind, um das Lichtbündel in Abhängigkeit der gewünschten Lichtverteilung aufzufächern.

11. Scheinwerfer (P) nach Anspruch 6 oder 7,
**dadurch gekennzeichnet, dass** die Austrittsseite (12) des einzigen Teils (4) Toren (11) zum Auffächern des Lichtbündels aufweist.

12. Scheinwerfer (P) nach einem der vorhergehenden Ansprüche,
**dadurch gekennzeichnet, dass** er für jede Lichtquelle (2) mit verringerter Größe einen Kollimator (C) und für die Gesamtheit der Lichtquellen eine reflektierende Wand (101) und eine lichtdurchlässige Blende (E) umfasst.

13. Scheinwerfer (P) nach Anspruch 12,
**dadurch gekennzeichnet, dass** die Blende (E) geometrische Formen aufweist, Toren (22) oder Rippen, um das Licht zum Gewährleisten der Lichtverteilung der gewünschten Beleuchtungsfunktion entsprechend zu verteilen.

14. Scheinwerfer (P) nach Anspruch 12 oder 13,
**dadurch gekennzeichnet, dass** jeder Kollimator (C) eine Aufnahme (14) für die zugeordnete Lichtquelle (2) verringerter Größe umfasst, wobei ein erster Bereich (16, 19) mittels Transmission funktioniert und ein den ersten Bereich umgebender zweiter Bereich (17, 20) mittels Totalreflexion.

15. Scheinwerfer (P) nach Anspruch 14,
**dadurch gekennzeichnet, dass** der zweite Bereich (17) des Schnitts des Kollimators (C) in der Meridianebene durch einen Parabelbogen (18) oder eine vergleichbare Kurve begrenzt ist, der bzw. die Lichtstrahlen allgemein parallel zur Achse (Y-Y) der Aufnahme (14) reflektiert, und dass der zweite Bereich (20) des Schnitts des Kollimators (C) in einer Ebene parallel zur Mittelebene des Diodenkranzes (2) durch eine ellipsenförmige Kurve (21) begrenzt ist, um die Lichtstrahlen allgemein zur Mitte konvergieren zu lassen.
